# EUROPEAN PATENT SPECIFICATION

(11) **EP 2 017 055 B1**
(45) Date of publication and mention of the grant of the patent: **27.04.2011**
(21) Application number: 07738049.1
(22) Date of filing: 08.03.2007
(51) Int. Cl.: B29C 41/12, B29C 41/14, C08J 5/18, B29K 61/04, B29K 61/20, B29K 63/00, B29K 67/00, B29K 75/00, B29L 7/00

(54) **METHOD FOR PRODUCTION OF POLYMER THIN FILM**
VERFAHREN ZUR HERSTELLUNG EINER POLYMER-DÜNNSCHICHT
MÉTHODE DE PRODUCTION D'UN FILM MINCE POLYMÈRE

(30) Priority: 21.04.2006 JP 2006118134
(43) Date of publication of application: 21.01.2009
(73) Proprietor: Riken, Wakou-shi, Saitama 351-0198 (JP)
(72) Inventor: KUNITAKE, Toyoki, Wako-shi, Saitama 351-0198 (JP); WATANABE, Hirohmi, Wako-shi, Saitama 351-0198 (JP)
(74) Representative: Grünecker, Kinkeldey, Stockmair & Schwanhäusser Anwaltssozietät
(86) International application number: PCT/JP2007/054559
(87) International publication number: WO 2007/122884

(56) References cited:
- JP-A- 05 301 974
- JP-A- 2004 203 933

## Description

The present invention relates to a method for manufacturing a polymer thin film.

Studies have been conducted on various methods for manufacturing a thin film having a self-supporting property. Examples of such methods encompass water-surface casting and interfacial reaction that uses a silane coupling agent. Unfortunately, thin films obtained by these methods generally lack mechanical strength and are limited in accuracy.

On the other hand, thin films made of biological lipid are formed with significantly high accuracy because of self-assembling capability of molecules of the biological lipid. However, the thin films have insufficient mechanical strength for use as a functional thin film. Therefore, thin films made of biological lipid require a structure of multilayered films. Such thin films do not excel in general utility.

A Langmuir-Blodgett (LB) method and an layer-by-layer method (an LbL deposition method), which are known as methods for forming a thin film, require complicated manufacturing operations and in many cases, cause an aggregate of microcrystalline domains that contain many defects. Therefore, the methods are not highly practical. That is, it is difficult to obtain by the aforementioned methods a thin film having a large surface area and high strength.

Generally, a thin film, particularly, a thin film having a self-supporting property tends to have a defect on a surface thereof with a greater surface area. Many of those called self-supporting thin layer have a porous support as a substrate.

Non-patent Document 1 describes a method for forming a thin film. In the method, polyethylenimine is adsorbed by ion adsorption onto that surface of a self-supporting film (self-assembled monolayer) which has a carboxyl group and a methyl group. A thin film is then formed through cross-linking. However, the method cross-links a self-supporting film with a layer of polyethylenimine adsorbed on the surface of the self-supporting film. That is, the layers are cross-linked to each other.

Known polymer thin films do not encompass such a polymer thin film that the polymer thin film itself has a self-supporting property, without the need of a support Examining Division., and has an aspect ratio of 10⁶ or more and a strength of 10 Examining Division or more while the film thickness is 100 nm or less.
[Non-Patent Document 1] Angew. Examining Division. Int. Examining Division. 2000, 39, No.6

JP-A-2004/203933 relates to a polyurethane casting film obtained by applying an organic solvent solution comprising a silicon resin-containing non-yellowing polyurethane polyurea resin, an acrylic resin, an aminoplast and a crosslinking catalyst onto a releasable substrate and thermally crosslinking it.

JP-A-05301974 relates to a method for making a particulate filled polymeric matrix composite film, including mixing a polymeric matrix material with a dispersion of particulate filler in a carrier liquid to form a casting composition and adjusting the viscosity of the casting composition to retard separation of the particulate filler from the composition.

In order to solve the problem, an object of the present invention is to manufacture a polymer thin film having high strength, flexibility, and accuracy, and having a large surface area, which polymer thin film cannot be obtained by conventional methods.

In view of the problem, the inventors of the present invention diligently studied and, as a result, found that the problem can be solved by the following means.

A method for manufacturing a polymer thin film, comprising: providing a sacrifice layer on a surface of a support; providing a layer of thermally-crosslinkable resin composition on a surface of the sacrifice layer; cross-linking a thermoplastic resin in the layer of thermally-crosslinkable resin composition thus provided; and after the thermoplastic resin is cross-linked, separating the support from the layer of thermally-crosslinkable resin composition by removing the sacrifice layer.

Preferred embodiments are set forth in the subclaims.

The present invention makes it possible to obtain a polymer thin film having high strength, flexibility, and accuracy. Furthermore, the present invention makes it possible to obtain a polymer thin film that has a large surface area and is thin in film thickness, in addition to the aforementioned properties.
Fig. 1 illustrates a scheme of a method for manufacturing a polymer thin film in Examples of the present invention.
Fig. 2 shows an IR spectrum measured in Example 2.
Fig. 3 shows a result of SEM observation in Example 2.
Fig. 4 shows a result of SEM observation in Example 3.
Fig. 5 shows a UV spectrum measured in Example 5.
Fig. 6 shows a result of SEM observation in Example 6.
Fig. 7 shows a UV spectrum measured in Example 7.
Fig. 8 shows films produced in Example 8.
Fig. 9 shows a result of SEM observation in Example 10.
Fig. 10 shows thin films produced in Example 12.
Fig. 11 shows a polymer thin film produced in Example 14, the polymer thin film provided with a platinum layer on its surface.
Fig. 12 shows a polymer thin film produced in Example 15, the polymer thin film containing a dye.

### [Explanation of reference numerals]

- 1: Support
- 2: Sacrifice layer
- 3: Crosslinkable resin composition
- 4: Polymer thin film

The following describes the present invention in detail. In this specification, "value A to value B" means that the value A and the value B are included as the lower limit and the upper limit, respectively.

In the present invention, a method for manufacturing a polymer thin film, includes: providing a sacrifice layer on a surface of a support; providing a layer of thermally-crosslinkable resin composition on a surface of the sacrifice layer; cross-linking a thermoplastic resin in the layer of thermally-crosslinkable resin composition thus provided; and after the thermoplastic resin is cross-linked, separating the support from the layer of thermally-crosslinkable resin composition by remaining the sacrifice layer.

Conditions for the cross-linking are not particularly specified, provided that the conditions do not depart from the gist of the present invention. For example, the cross-linking may be carried out (i) at a temperature in a range of 60°C to 120°C for 1 minute to 120 minutes, or (ii) at a temperature in a range of 100°C to 120°C for 5 minutes to 10 minutes.

A resin to be contained in the thermally-crosslinkable resin composition is, for example, a resin that is cross-linked by placing the resin in an environment of 25°C and then heating the resin in order to make a temperature increase of 30°C or higher. Examples of such a resin specifically encompass urea resin, melamine resin, phenol resin, epoxy resin, unsaturated polyester resin, alkyd resin, and urethane resin. Melamine resin, phenol resin, and epoxy resin are more preferable. Epoxy resin is further more preferable. This is because epoxy resin does not shrink much when cured. Accordingly, epoxy resin excels in dimensional stability. In addition, epoxy resin has high flexibility. Furthermore, a great deal of various fillers can be added to epoxy resin. Moreover, epoxy resin excels in electrical properties.

Any one of epoxy resins of bisphenol-type, novolac-type, and ethyleneglycol-type can be preferably employed.

A molecular weight (Mw) of a resin contained in the thermally-crosslinkable resin composition of the present invention is preferably in a range of 100 to 1,000,000 as an epoxy component, and is preferably in a range of 50 to 1,000,000 as an amine component. The ranges make it possible to advantageously employ wide variety of compositions and design a curable resin such that the curable resin has desired properties according to needs. The amine component is preferably a polyfunctional amine.

As in the case of conventional methods for making an epoxy resin for a thick film, the thermally-crosslinkable resin composition may contain a reactive or nonreactive diluent, and/or other additive(s), in order to make it easier to perform film formation.

A thermoplastic resin composition used in the method of the present invention may contain an other material that is irrelevant to the formation of a cross-linked structure.

This is preferable because further functions can be provided to a film.

The other material may be an organic compound or inorganic compound. Examples of the other material encompass a dye, a pigment, metal particles, metal oxide particles, organic particles, organic small molecules, an organic polymer, a dendrimer, biological molecules, a carbon nanotube, a fullerene, carbon black, and a clay mineral, at least one of which the other material may be. The dye may be a general functional dye such as azobenzen and spiropyran, as well as a general fluorescent dye such as rhodamine, pyrene, porphyrin, etc. Examples of the pigment encompass polycyclic pigments such as an azo pigment and phtalocyanin blue, and inorganic pigments such as nickel titanium yellow. Examples of the metal particles encompass gold ultrafine particles, silver ultrafine particles, platinum fine particles, and tungsten fine particles. Examples of the metal oxide particles encompass aluminum oxide, titanium oxide, silicon oxide, and tin oxide. Examples of the organic particles encompass polystyrene latex, acrylamide particles, and polystyrene fine particles that are cross-linked by divinylbenzen. Examples of the organic small molecules encompass various functional molecules such as a carbazole derivative, a TTF (tetrathiafulvalene) derivative, quinone derivatives, thiophene, and a pyrrole derivative. Examples of the organic polymer encompass crystalline polymers such as polyethylene, polypropylene, and polyamide, and amorphous polymers such as polystyrene, polycarbonate, and polysulphone. Examples of the biological molecules encompass molecules of DNA, molecules of protein, phosphatic molecules, molecules of glucose, and molecules of ATP. Examples of the clay mineral encompass zeolite, kaolinite, montmorillonite, and chlorite. Examples of the dendrimer encompass a PMMA dendrimer, a thiophene dendrimer, and a poly(admidoamine)dendrimer. The thermoplastic resin composition may contain the other material by 0.01 % to 80 % by weight. An obtained polymer thin film preferably contains the other material by 0.1 % to 40 % by weight. As such, the manufacturing method of the present invention makes it possible to prepare a thin film containing a material of various types. For example, a polymer thin film containing a dye can be used as an optical material. A polymer thin film containing a metal oxide can be used as an interlayer insulating film. The thermally-crosslinkable resin composition is normally prepared by adding a resin, the other material, and/or the like in a solvent. The solvent is not particularly limited, but can be, for example, chloroform, cyclohexanone, diethyleneglycoldimethylether, ethyl lactate, or the like. The thermally-crosslinkable resin composition preferably contains the thermally-crosslinkable resin by 0.001 % to 30 % by weight with respect to the whole thermally-crosslinkable resin composition.

In the present invention, a layer of thermally-crosslinkable resin composition is provided on a surface of the sacrifice layer.

A resin composition to be given a cross-linked structure is provided in the form of one layer, and then, the layer of thermally-crosslinkable resin composition is cross-linked. This makes it possible to form in the layer the cross-linked structure.

This makes it possible to manufacture a polymer thin film having a strength which is significantly higher than the conventional art, a self-supporting property, and further, a large surface area.

The thermally-crosslinkable resin composition is provided on a a sacrifice layer, which is described later.

It is preferable to clean in advance a surface on which the thermally-crosslinkable resin composition is to be provided. The surface is cleaned by a liquid containing acid or, preferably, by a piranha solution. Including such an operation makes it easier to separate the cross-linked resin composition (i.e., the polymer thin film of the present invention) from the support.

As a method for providing the layer of thermally-crosslinkable resin composition, it is possible to employ a wide variety of methods for providing a thin layer, such as spin coating and dip coating.

In the case of spin coating, the number of revolutions is preferably in a range of 600 rpm to 8000 rpm.

In the present invention, the film thickness can be adjusted by adjusting the concentration of resin of the thermally-crosslinkable resin composition, conditions of spin coating, etc.

The present invention includes the step of separating the thermally-crosslinkable resin composition from the sacrifice layer after the thermally-crosslinkable resin composition is cross-linked. A conventional method can be employed as a method for separating the cross-linked thermoplastic resin composition from the sacrifice layer.

A method for providing and removing a sacrifice layer may be any method, provided that the polymer thin film of the present invention is not damaged. Such a method is preferably a method for dissolving the sacrifice layer by immersing the layer of thermally-crosslinkable resin composition on the sacrifice layer into a solvent that dissolves only the sacrifice layer but the layer of thermally-crosslinkable resin composition, namely, the polymer thin film. In a case where this method is employed, it is preferable to provide an incision between the sacrifice layer and the polymer thin film, because this promotes soaking of the sacrifice layer with the solvent.

In the present invention, particularly, the sacrifice layer may be preferably a polymer whose solubility in a solvent is changed from insoluble to soluble by an external stimulus.

Such a polymer is preferably a crosslinkable polymer, or more preferably, a thermally-crosslinkable-photodegradable polymer or a photocrosslinkable-thermally-degradable polymer. Examples of the thermally-crosslinkable photodegradable polymer encompass a combination of vinyl ether, a hydroxy or acidic polymer, and a photoacid generating agent. Concrete examples of such a thermally-crosslinkable-photodegradable polymer encompass one described in Japanese Unexamined Patent Publication Tokukaihei No. 9-274320 and one described in Japanese Unexamined Patent Publication Tokukai No. 2004-117878. Examples of the photocrosslinkable thermally-degradable polymer encompass a polymer having a side-chain epoxy group. Concrete examples of the photocrosslinkable thermally-degradable polymer encompass one described in Chem. Mater. 2002, 14, 334-340. The use of such a thermally-crosslinkable-photodegradable polymer or a photocrosslinkable thermally-degradable polymer is advantageous in that almost all the solvents become applicable to the thermally-crosslinkable resin composition provided on the sacrifice layer.

The support can be made of glass, a silicon wafer, mica, a gold substrate, or the like. As the sacrifice layer, it is possible to employ polyhydroxy styrene, polystyrene sulfonate, a resist material for a semiconductor, a thermally-crosslinkable polymer, or the like. The solvent used for providing the sacrifice layer is preferably a solvent that does not damage the polymer thin film of the present invention. However, this is not essential, provided that a manufacturing method does not depart from the gist of the present invention, as in a case where a layer of thermally-crosslinkable resin composition is provided after the solvent is completely vaporized.

A polymer thin film obtained according to the method of the present invention has advantageous properties that cannot be obtained by conventional methods.

First, the use of the manufacturing method of the present invention makes it possible to obtain a self-supporting polymer thin film. What is meant by the term "Self-supporting" is that the polymer thin film layer retains its form as a thin film even if a substrate is removed.

Furthermore, the manufacturing method of the present invention makes it possible to manufacture a polymer thin film having the following properties.
(1) A polymer thin film having the self-supporting property even if the film thickness is, for example, 100 nm or less, or further, 30 nm or less.
(2) A polymer thin film having a surface area of 100 mm² or more.
(3) A polymer thin film having an aspect ratio (i.e., a ratio of an area to a thickness) of 10⁶ or higher, especially, 10⁷ or higher.
(4) A polymer thin film having a dimensional accuracy of 1 % or less with respect to the support, and thereby being excellent in dimensional stability.
(5) A polymer thin film having a strength of, for example, 1 MPa or more, or further, 10 MPa or more.
(6) A polymer thin film that can retain the self-supporting property semipermanently (e.g., for one year or more).
(7) A polymer thin film having an ultimate stretch/shrinkage rate of 0.1% or higher and thereby being excellent in flexibility.
(8) A polymer thin film containing a thermoplastic resin by 20 % to 99.9 % by weight.

A polymer thin film obtained by the manufacturing method of the present invention further has sufficient mechanical strength that has not been attained by a straight-chain polymer thin film which is not cross-linked and by a polymer thin film made by forming a cross-linked structure between two layers.

The polymer thin film obtained by the method of the present invention can have any thickness according to use. For example, the thickness is in a range of 3 nm to 100 nm, and preferably, in a range of 10 nm to 50 nm. A thickness in the ranges gives the polymer thin film flexibility, which cannot be attained by thick films, heightens permeability, and further, allows use as a closely-packed protective film.

As described above, the polymer thin film itself may have functionality by itself. Alternatively, it is possible to give the functionality to the polymer thin film by providing a functional layer on a surface of the polymer thin film, or by adhering a functional material to the surface. Examples of the functional layer encompass a metal layer, a polymer layer, and a metal oxide layer. Examples of the functional material encompass a dye (especially, a dye containing a functional group, such as rhodamine isothiocyanate, fluorescamine, dansyl chloride, or dabsyl chloride), a pigment, liquid crystal molecules, metal particles, and further, semiconductor fine particles, and oxide fine particles.

### [Examples]

The following describes the present invention more specifically by examples. Materials, amounts to use, proportions, processes, processing procedures, etc. may be changed as appropriate, within the gist of the present invention. Therefore, the scope of the present invention is not limited to the following examples.

### Example 1

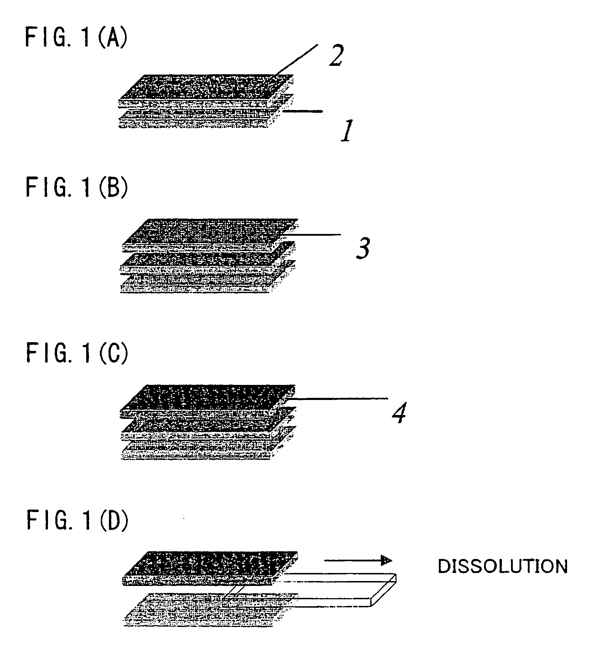

A polymer thin film was made according to procedures (A) through (D), which are illustrated in Fig. 1.
(A) A silicon wafer, which was a support 1, was cleaned by a piranha solution. Then, 100 µl of an ethanol solution containing 5 wt% polyhydroxy styrene (PHS) was dropped on the support, namely, on the silicon wafer, and applied by spin coating (3000 rpm, 60 seconds). This resulted in a PHS layer (a sacrifice layer 2) having a thickness of approximately 0.1 µm.
(B) A 1:1 (by weight) mixture of (i) a novolac-type epoxy oligomer (PCGF: Poly[(o-cresol glycidyl ether)-co-formaldehyde]); Mw=ca 800), which is shown in Chemical Formula 1, and (ii) polyethylenimine (PEI: Mw=25000) was added in chloroform so that an epoxy resin composition (epoxy resin content: 0.1 wt%) was prepared. The mixture of (i) and (ii) contained a reactive amine content of 2.7 eq. based on epoxy. The epoxy resin composition (a thermally-crosslinkable resin composition 3) was applied on the PHS layer by spin coating so that a layer of the epoxy resin composition was formed on the PHS layer (8000 rpm, 60 seconds). 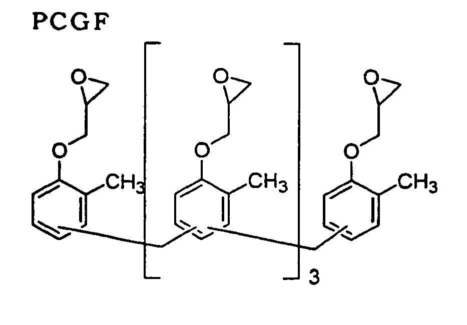
(C) A sample obtained in (B) was heated on a hotplate at a temperature of 120°C for 5 minutes so that the sample was cross-linked. The sample thus cross-linked was a polymer thin film 4.
(D) A sample obtained in (C) was let stand in an air so that the sample was cooled down to room temperature.
Then, the sample was immersed in ethanol. Before the immersion, the sample had been incised on its edge surface by using a design knife. After the sample was let stand for a while, the PHS layer was dissolved away in the ethanol, thereby the epoxy polymer thin film 4 was detached from the support 1. Then, the solvent was dried away from the epoxy polymer thin film 4. In this way, the epoxy polymer thin film 4 was prepared.

### Example 2

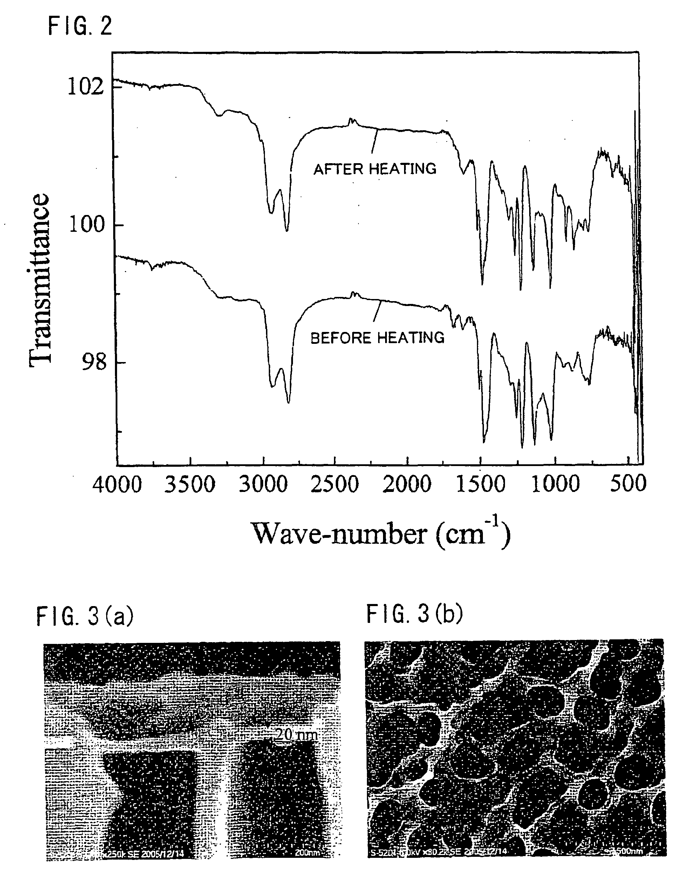

Measured was an infrared spectrum (IR spectrum) of the epoxy polymer thin film obtained in Example 1. Similarly measured was an IR spectrum of the epoxy resin composition applied in the form of a layer and not heated yet in Example 1. Fig. 2 shows the result. It was confirmed that a peak at a wave-number of 910 cm⁻¹, which peak was caused by -C-O- stretching vibrations of an epoxy ring, mostly disappeared after the heating. In addition, it was confirmed that, after the heating, out-of-plane stretching vibrations of amine (860 cm⁻¹) moved to a higher wave-number side. The result suggested that thermal-crosslinking reaction was sufficiently facilitated.

The epoxy polymer thin film obtained in Example 1 was transferred onto an alumina membrane and observed by a scanning electron microscope (SEM). Fig. 3 shows the result. In Fig. 3, (a) is a cross-sectional photograph of the epoxy polymer thin film; (b) is a photograph of a surface of the epoxy polymer thin film. From the photographs, it was confirmed that a thickness of the epoxy polymer thin film obtained in Example 1 was approximately 20 nm. Also, it was confirmed that an ultrathin area of the epoxy polymer thin film was curved according to unevenness of the alumina membrane. From the result, it was confirmed that the epoxy polymer thin film obtained in Example 1 had sufficient flexibility.

Based on Fig. 3(b), it was also confirmed that the obtained epoxy polymer thin film had no crack.

Furthermore, it was confirmed that a mechanical strength of the epoxy polymer thin film obtained in Example 1 was 30 MPa. An aspect ratio of the epoxy polymer thin film was 0.8 × 10⁵.

In conclusion, it was confirmed that the epoxy polymer thin film obtained in Example 1 had the self-supporting property, and had mechanical strength and flexibility, which are properties incompatible with each other.

### Example 3

Epoxy polymer thin films were prepared in the same way as Example 1, except that the epoxy resin content in the epoxy resin composition and the number of revolutions of spin coating were changed from these of Example 1, as shown in Table 1. Table 1 also shows film thicknesses of obtained epoxy polymer thin films.

**[Table 1]**

| Sample | Epoxy resin content (wt%) | Number of revolutions (rpm) | Strength (MPa) | Ultimate stretch/shrinkage rate (%) | Film thickness (nm) |
|---|---|---|---|---|---|
| Polymer thin film(a) | 1.0 | 4000 | 47.0 | 0.61 | 180 |
| Polymer thin film(b) | 0.5 | 8000 | 53.5 | 0.60 | 80 |
| Polymer thin film(c) | 0.1 | 8000 | 30.4 | 0.30 | 30 |
| Polymer thin film(d) | 0.05 | 8000 | 8.3 | 0.24 | 20 |

It was confirmed that any polymer thin film shown in Table 1 was a self-supporting thin film having high strength and high flexibility.

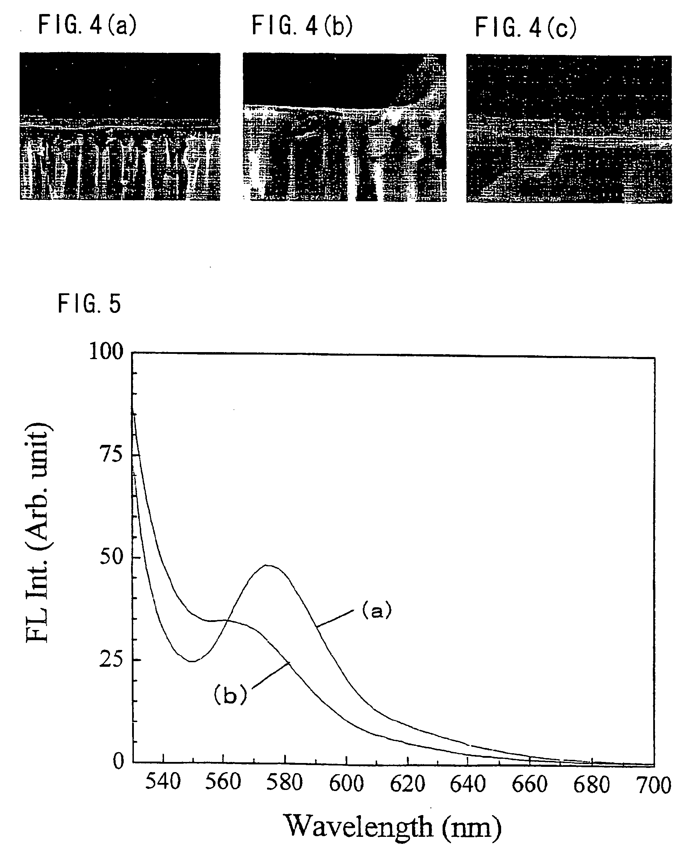

Fig. 4 shows SEM photographs of the polymer thin films (a) through (c). The photographs (a) through (c) in Fig. 4 are cross-sectional photographs of the polymer thin films (a) through (c) in Table 1, respectively.

### Example 4

An epoxy polymer thin film was prepared in the same way as Example 1, except that a ratio of PEI to PCGF was changed from that of Example 1. Confirmed was that it was possible to obtain, in at least a ratio range of PCGF:PEI=1:0.2 to 1:1.5, a self-supporting film that had no crack on a surface, excelled in strength, and had flexibility.

### Example 5

An epoxy polymer thin film was prepared in the same way as Example 1, except that it was changed from (B) of Example 1 that a rhodamine dye was added to the epoxy resin composition by 1 part by weight based on epoxy resin. As a result, a polymer thin film containing rhodamine was obtained. An ultraviolet spectrum (a UV spectrum) was measured for the polymer thin film (a) containing rhodamine, and for a comparative sample (b), which was a quartz substrate on which epoxy thin film containing a rhodamine dye was directly applied, but no sacrifice layer was provided. As shown in Fig. 5, luminescence caused by the rhodamine dye was observed around a 570 nm in the spectrum of the polymer thin film (a) containing rhodamine. As such, the polymer thin film (a) containing rhodamine was as satisfactory as the comparative sample (b).

This was considered that the polymer thin film (a) containing rhodamine dye efficiently captured guest molecules because the polymer thin film (a) had high density due to the cross-linked structure thereof. In addition, it was confirmed that the polymer thin film (a) containing rhodamine dye was a self-supporting thin film having high strength and high flexibility.

### Example 6

Epoxy polymer thin films were prepared in the same way as the Example 1, except that an epoxy resin composition layer was provided by dip coating instead of (B) of Example 1.

That is, first, (A) of Example 1 was carried out. Then, PCGF and PEI were added in toluene so that an epoxy resin composition was made. The support on which a sacrifice layer was provided (i.e., the support obtained in (A) of Example 1) was immersed in the epoxy resin composition for three minutes. The support was then washed and dried. The immersion, washing, and drying were repeated five to ten times. Then, (C) and (D) of Example 1 were carried out.

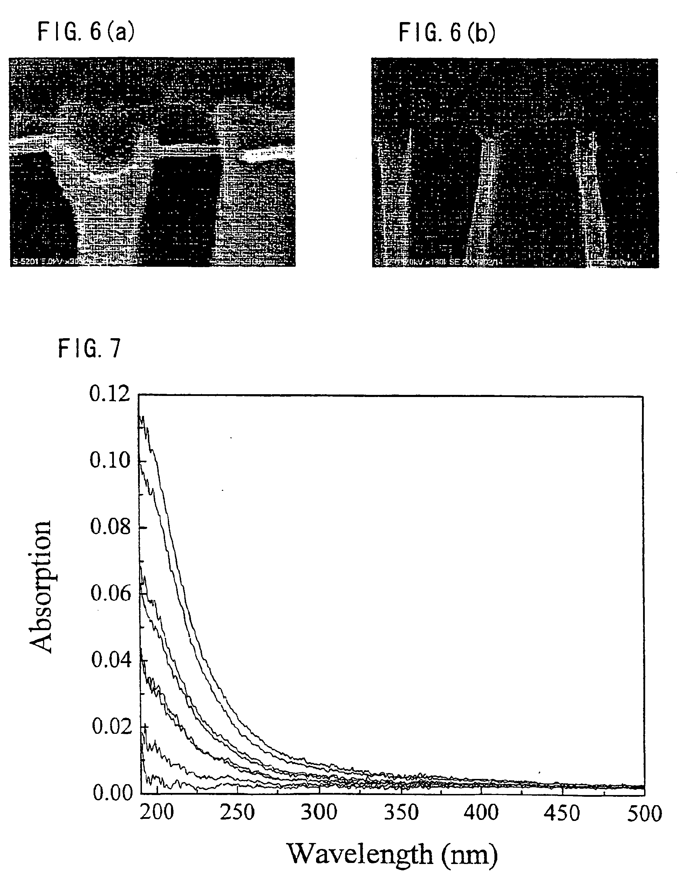

Fig. 6 shows SEM photographs of the obtained epoxy polymer thin films. In Fig. 6, (a) is a photograph of the epoxy polymer thin film obtained by repeating five times the immersion, washing, and drying. (b) is a photograph of the epoxy polymer thin film obtained after repeating ten times the operations.

The epoxy polymer thin films were self-supporting thin films that excelled in strength and flexibility.

### Example 7

Epoxy polymer thin films were prepared in the same way as in Example 6, except that a ZrO₂ precursor was added to the epoxy resin composition. A UV spectrum was measured was carried out for each of the obtained epoxy polymer thin films. Fig. 7 shows the result. In the order of decreasing in absorption at a wavelength of 200 nm, ratios (mole ratios) of ZrO₂ to the epoxy resin in the epoxy resin composition are 1:0, 1:1, 2:1, 2:2, 3:2, 3:3, 4:3, and 4:4 in Fig. 7.

It was confirmed from the result that a metal oxide could be contained in the polymer thin film of the present invention. It was confirmed that the obtained polymer thin films were self-supporting thin films having high strength and high flexibility.

### Example 8

Polymer thin films (a), (b), and a comparative sample were obtained in the same way as Example 1 except that the epoxy resin in Example 1 was replaced with each of the resins shown in Table 2 below.

**[Table 2]**

| | Resin Type |
|---|---|
| Polymer thin film (a) | EPON828 (bisphenol-type) |
| Polymer thin film (b) | DER736 (ethylene glycol-type) |
| Comparative sample | cyclohexene oxide (monofunctional glycidyl) |

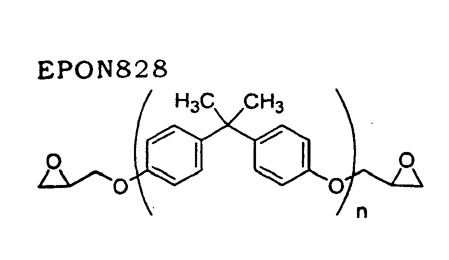

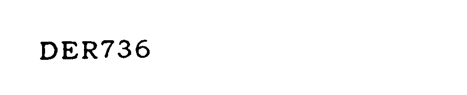

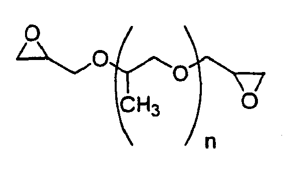

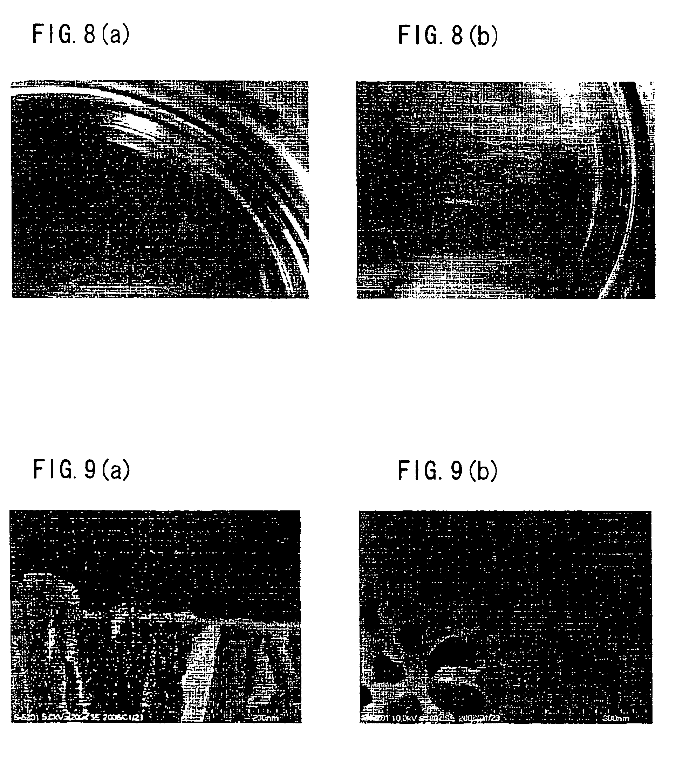

Fig. 8 shows photographs of obtained polymer thin films (a) and (b) that were captured by a digital camera. It was confirmed that either of the polymer thin films (a) and (b) was a self-supporting thin film having high strength and flexibility.

On the other hand, the comparative sample containing monofunctional glycidyl did not form a cross-linked structure and therefore did not have sufficient strength. As a result, a thin film was not obtained from the comparative sample.

### Example 9

A polymer thin film was prepared in the same way as in Example 1, except that PEI in Example 1 was replaced with hexylamine (monofunctional amine) or hexamethylenediamine (bifunctional amine). The polymer thin film was a self-supporting thin film having higher strength and flexibility as compared to conventional polymer thin films, although the polymer thin film was inferior in strength as compared to the polymer thin film obtained in Example 1.

### Example 10

The epoxy resin composition in Example 1 was replaced with a melamine resin composition. The melamine resin composition was prepared in accordance with "Courses in Experimental Chemistry" ("Jikken Kagaku Kouza", Vol. 28, P. 431). Specifically, 3.78 g of melamine (0.03 mol) and 19.5 g of a 37% formaldehyde solution (0.24 mol) whose pH was adjusted to 7.5 with a 10% sodium hydroxide solution were poured in a 50 ml reactor vessel and heated (at a temperature in a range of 60°C to 70°C), in hot water while being stirred, until the mixture was completely dissolved therein. After further heating for 10 minutes, the reaction was stopped and the resultant solution was cooled down. Generated precipitation was filtrated out by suction filtration and sufficiently washed with ethanol. Then, the ethanol solution was applied onto a substrate by spin coating as in the case of the epoxy resin. The substrate was baked at 80C°. Thereby, hexamethylolmelamine (melamine resin) was obtained.

A melamine polymer thin film thus obtained was observed by an SEM.

Fig. 9 shows the result. In Fig. 9, (a) is a cross-sectional photograph of the melamine polymer thin film; (b) is a photograph of a surface of the melamine polymer thin film. It was confirmed that the melamine polymer thin film obtained in the present example was a self-supporting thin film having high strength and high flexibility.

### Example 11

A phenol resin composition in Example 1 was used instead of the epoxy resin composition. The phenol resin composition was prepared in accordance with "Couses in Experimental Chemistry" ("Jikken Kagaku Kouza", Vol. 28, P. 428). Specifically, 12.2 g of salicyl aldehyde (0.1 mol), 37.6 g of phenol (0.4mol), and 0.38g of p-toluenesulphonic acid were putted in a 100ml three-necked flask and reacted with each other for two hours at a temperature in a range of 90°C to 100°C and for further two hours at a temperature in a range of 120°C to 150°C. The reacting system was cooled down to 70°C. Then, 500ml of methyl isobutyl ketone was added to the reacting system. The resultant solution was washed with water until the water used in the washing became neutral. Thereby, an organic layer was obtained. Then the organic layer was adequately diluted, and, as in the case of the epoxy resin, was applied onto a substrate by spin coating. A novolac-type phenol resin thus obtained was cured at room temperature. It was confirmed that a phenol polymer thin film thus obtained in the present example was a self-supporting thin film having high strength and high flexibility.

An epoxy polymer thin film was prepared in the same way as in Example 1, except that (A) and (D) in Example 1 were changed as below.

That is, a 20 mol% vinyl ether compound was added to PHS as shown in the scheme below. The mixture of PHS and the vinyl ether compound was dropped on a silicon wafer whose surface was processed as in the case of (A) of Example 1 and applied by spin coating (3000 rpm, 60 seconds). After the application, the silicon wafer was heated for five minutes at 120°C. The vinyl ether section was thereby reacted with a hydroxyl group of PHS. As a result, a sacrifice layer having a three-dimensionally cross-linked structure was obtained.

In addition, the sample thus obtained was treated as in (D) of Example 1, except that the sample was immersed in 1 mM of HCI / ethanol instead of ethanol. Except for this, an epoxy polymer thin film was prepared from the sample in the same way as in Example 1.

This produced an epoxy polymer thin film that was as satisfactory as the one obtained in Example 1.

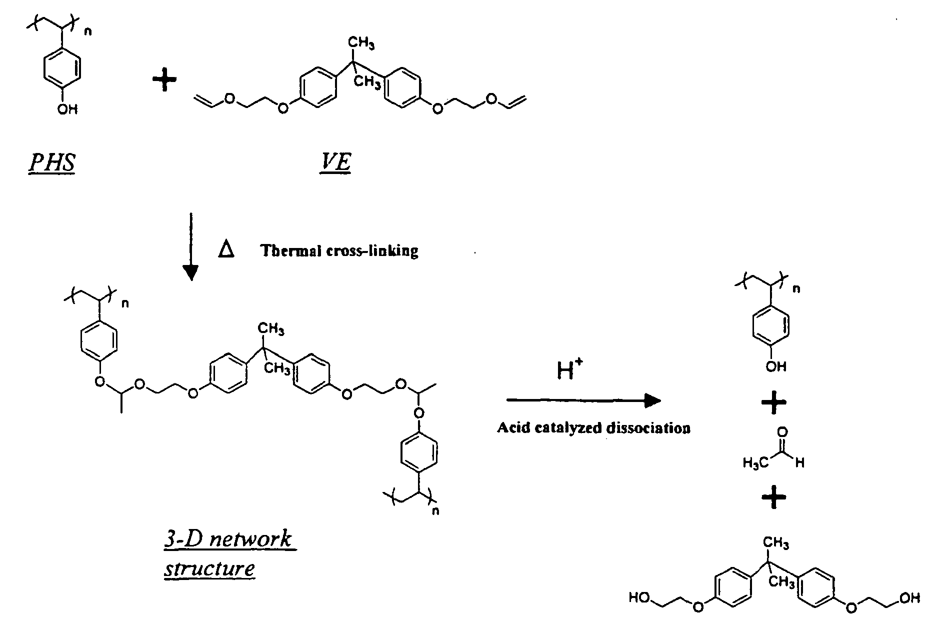

### Example 12

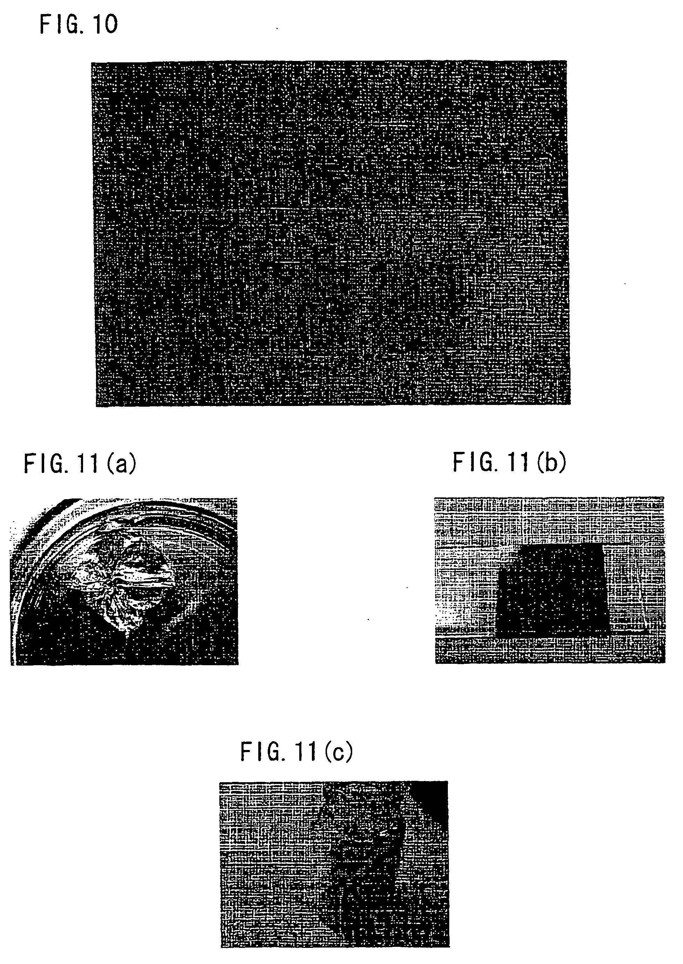

Epoxy polymer thin films were prepared in the same way as in Example 1, except that carbon black was added to the epoxy resin composition. From the result, it was confirmed that a polymer thin film containing the carbon black was formed. Fig. 10 is a photograph of the formed films that were captured by a digital camera. The photograph in Fig. 10 shows the formed thin films having the following respective carbon black contents in the epoxy resin composition: 0 wt%, 4.8 wt%, 9.1 wt%, 20 wt%, 33 wt%, and 50 wt%. From the result, it was confirmed that a polymer thin film could be made according to the present invention even if 50 wt% carbon black was added to an epoxy resin composition.

It was also confirmed in the present example that a polymer thin film could be similarly made in a case where the carbon black was replaced with clay or a carbon nanotube.

In addition, a UV spectrum was measured for each of the polymer thin films. As a result, it was confirmed that an absorption peak caused by the carbon black was monotonously became higher according to the carbon black contents. From the result, it was confirmed that the carbon black was combined with the thin films according to added amounts.

### Example 13

An epoxy polymer thin film was prepared in the same way as in Example 1, except that (A) and (D) in Example 1 were changed as below. The epoxy polymer thin film was as excellent as obtained in Example 1.

Specifically, methacrylate having a glycidyl group, to which a photoacid generating agent had been added was dropped on a silicon wafer whose surface was processed as in the case of (A) of Example 1 and applied by spin coating (3000 rpm, 60 seconds). After the application, the surface of the silicon wafer was irradiated with light and heated for five minutes at 40°C. The glycidyl group thereby went through cationic polymerization, thereby producing three-dimensionally cross-linked structure. As a result, a sacrifice layer was obtained that was insoluble in a solvent.

By further heating the silicon wafer for 10 minutes at 120°C in (C) of Example 1, the cross-linked structure was destroyed. As a result, the sacrifice layer became soluble in solvent again and therefore removable.

### Example 14

Platinum was deposited by an ion sputter (HITACHI E1030) onto a surface of the polymer thin film obtained in Example 1. Thus obtained was a functional multilayered thin film made of a polymer thin film onto which a platinum layer was deposited. Fig. 11 shows the result. In Fig. 11, (a) shows the functional multilayered thin film in ethanol; (b) shows the functional multilayered thin film transferred onto a glass substrate; (c) shows the functional multilayered thin film affixed onto a curved surface. From the result, it was confirmed that the platinum layer was remained on the polymer thin film layer even after the transfer.

### Example 15

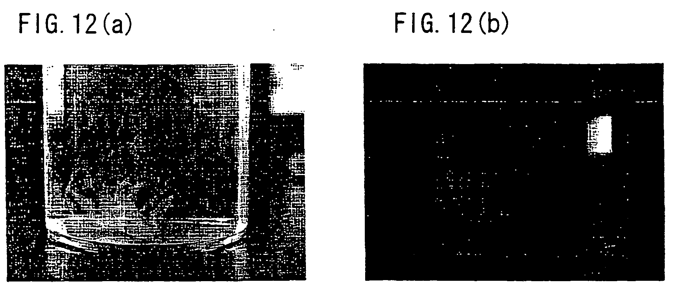

The polymer thin film prepared in Example 1 was immersed for 10 minutes in 1 mM of an ethanol solution containing rhodaminethioisocyanate, so that dye molecules were adhered to the surface of the polymer thin film. Then, the polymer thin film was sufficiently washed with ethanol. Fig. 12 shows the result. In Fig. 12, (a) is a photograph of the polymer thin film that was captured by a digital camera under a fluorescent lamp; (b) is a photograph of the polymer thin film that was captured by a digital camera under a black light. As is obvious from Fig. 12, luminescence specific to the dye was clearly observed.

The same result was obtained when fluorescamine was used instead of rhodaminethioisocyanate.

### INDUSTRIAL APPLICABILITY

A polymer thin film obtained by the manufacturing method of the present invention is applicable to wide variety of use. Specifically, the polymer thin film can be used as a thin film containing a material of various types. As such, the polymer thin film can be used as a functional thin film.

## Claims

1. A method for manufacturing a polymer thin film (4), comprising:
providing a sacrifice layer (2) on a surface of a support (1);
providing a layer of thermally-crosslinkable resin composition (3) on a surface of the sacrifice layer (2);
cross-linking a thermoplastic resin in the layer of thermally-crosslinkable resin composition (3) thus provided; and
after the thermoplastic resin is cross-linked, separating the support (1) from the layer of thermally-crosslinkable resin composition (3) by removing the sacrifice layer (2).

2. The method for manufacturing a polymer thin film (4) as set forth in claim 1, wherein:
the step of removing the sacrifice layer (2) is carried out by dissolving the sacrifice layer (2).

3. The method for manufacturing a polymer thin film (4) as set forth in either claim 1 or 2, wherein
the sacrifice layer (2) contains a crosslinkable polymer.

4. The method for manufacturing a polymer thin film (4) as set forth in either claim 1 or 2, wherein
the sacrifice layer (2) contains a thermally-crosslinkable-photodegradable polymer or a photocrosslinkable-thermally-degradable polymer.

5. The method for manufacturing a polymer thin film (4) as set forth in any one of claims 1 through 4, wherein:
the step of providing the layer of the thermally-crosslinkable resin composition (3) on the support (1) is carried out by spin coating or by dip coating.

6. The method for manufacturing a polymer thin film (4) as set forth in any one of claims 1 through 5, wherein:
the step of cross-linking the thermoplastic resin includes heating the thermoplastic resin for 1 minute to 120 minutes at a temperature in a range of 60°C to 120°C.

7. The method for manufacturing a polymer thin film (4) as set forth in any one of claims 1 through 6, wherein
the thermoplastic resin is a resin whose cross-linking proceeds when the resin is placed in an environment of 25°C, and then heated in order to make a temperature increase of 30°C or higher.

8. The method for manufacturing a polymer thin film (4) as set forth in any one of claims 1 through 7, wherein
the thermally-crosslinkable resin is at least one of urea resin, melamine resin, phenol resin, epoxy resin, unsaturated polyester resin, alkyd resin, or urethane resin.

9. The method for manufacturing a polymer thin film (4) as set forth in any one of claims 1 through 8, wherein
a composition of the thermoplastic resin contains at least one member selected from the group consisting of a dye, a pigment, metal particles, metal oxide particles, organic particles, organic small molecules, an organic polymer, a dendrimer, biological molecules, a carbon nanotube, a fullerene, carbon black, and a clay mineral.

## Patentansprüche

1. Verfahren zum Herstellen eines Polymerdünnfilmes (4), umfassend:
Bereitstellen einer Opferschicht (2) an einer Oberfläche eines Trägers (1);
Bereitstellen einer Schicht aus einer thermisch vernetzbaren Harzzusammensetzung (3) an einer Oberfläche der Opferschicht (2);
Vernetzen eines thermoplastischen Harzes in der so bereitgestellten Schicht aus der thermisch vernetzbaren Harzzusammensetzung (3); und
nach dem Vernetzen des thermoplastischen Harzes erfolgendes Trennen des Trägers (1) von der Schicht aus der thermisch vernetzbaren Harzzusammensetzung (3) durch Entfernen der Opferschicht (2).

2. Verfahren zum Herstellen eines Polymerdünnfilmes (4) nach Anspruch 1, wobei:
der Schritt des Entfernens der Opferschicht (2) durch Auflösen der Opferschicht (2) ausgeführt wird.

3. Verfahren zum Herstellen eines Polymerdünnfilmes (4) entweder nach Anspruch 1 oder nach Anspruch 2, wobei:
die Opferschicht (2) ein vernetzbares Polymer enthält.

4. Verfahren zum Herstellen eines Polymerdünnfilmes (4) entweder nach Anspruch 1 oder nach Anspruch 2, wobei:
die Opferschicht (2) ein thermisch vernetzbares und fotoabbaubares Polymer oder ein fotovernetzbares und thermisch abbaubares Polymer enthält.

5. Verfahren zum Herstellen eines Polymerdünnfilmes (4) nach einem der Ansprüche 1 bis 4, wobei:
der Schritt des Bereitstellens der Schicht aus der thermisch vernetzbaren Harzzusammensetzung (3) an dem Träger (1) durch Aufschleuderbeschichten (spin coating) oder durch Tauchbeschichten (dip coating) ausgeführt wird.

6. Verfahren zum Herstellen eines Polymerdünnfilmes (4) nach einem der Ansprüche 1 bis 5, wobei:
der Schritt des Vernetzens des thermoplastischen Harzes ein Erwärmen des thermoplastischen Harzes für 1 min bis 120 min bei einer Temperatur in einem Bereich von 60 °C bis 120 °C beinhaltet.

7. Verfahren zum Herstellen eines Polymerdünnfilmes (4) nach einem der Ansprüche 1 bis 6, wobei:
das thermoplastische Harz ein Harz ist, dessen Vernetzen erfolgt, wenn das Harz in eine Umgebung von 25 °C eingebracht ist und sodann erwärmt wird, um einen Temperaturanstieg von 30 °C oder mehr zu bewirken.

8. Verfahren zum Herstellen eines Polymerdünnfilmes (4) nach einem der Ansprüche 1 bis 7, wobei:
das thermisch vernetzbare Harz wenigstens eines von Harnstoffharz, Melaminharz, Phenolharz, Epoxydharz, ungesättigtem Polyesterharz, Alkydharz oder Urethanharz ist.

9. Verfahren zum Herstellen eines Polymerdünnfilmes (4) nach einem der Ansprüche 1 bis 8, wobei:
eine Zusammensetzung des thermoplastischen Harzes wenigstens ein Element enthält, das aus einer Gruppe ausgewählt ist, die aus einem Farbstoff, einem Pigment, Metallteilchen, Metalloxidteilchen, organischen Teilchen, organischen Kleinmolekülen,
einem organischen Polymer, einem Dendrimer, biologischen Molekülen, einer Karbonnanoröhre, einem Fulleren, Karbonschwarz und einem Tonmaterial besteht.

## Revendications

1. Procédé pour fabriquer un film mince polymère (4) comprenant :
la fourniture d'une couche sacrificielle (2) sur une surface d'un support (1) ;
la fourniture d'une couche de composition de résine réticulable thermiquement (3) sur une surface de la couche sacrificielle (2) ;
la réticulation d'une résine thermoplastique dans la couche de composition de résine réticulable thermiquement (3) ainsi fournie ; et
après que la résine thermoplastique soit réticulée, la séparation du support (1) d'avec la couche de composition de résine réticulable thermiquement (3) par retrait de la couche sacrificielle (2).

2. Procédé pour fabriquer un film mince polymère (4) selon la revendication 1 où :
l'étape de retrait de la couche sacrificielle (2) est accomplie par dissolution de la couche sacrificielle (2).

3. Procédé pour fabriquer un film mince polymère (4) selon la revendication 1 ou 2 où
la couche sacrificielle (2) contient un polymère réticulable.

4. Procédé pour fabriquer un film mince polymère (4) selon la revendication 1 ou 2 où
la couche sacrificielle (2) contient un polymère réticulable thermiquement-photodégradable ou un polymère photoréticulable-dégradable thermiquement.

5. Procédé pour fabriquer un film mince polymère (4) selon l'une quelconque des revendications 1 à 4 où :
l'étape de fourniture de la couche de composition de résine réticulable thermiquement (3) sur le support (1) est accomplie par revêtement centrifuge ou par revêtement par immersion.

6. Procédé pour fabriquer un film mince polymère (4) selon l'une quelconque des revendications 1 à 5 où :
l'étape de réticulation de la résine thermoplastique inclut le chauffage de la résine thermoplastique pendant 1 minute à 120 minutes à une température dans une plage de 60°C à 120°C.

7. Procédé pour fabriquer un film mince polymère (4) selon l'une quelconque des revendications 1 à 6 où
la résine thermoplastique est une résine dont la réticulation se produit quand la résine est placée dans un environnement de 25°C, puis chauffée pour produire une augmentation de la température de 30°C ou plus.

8. Procédé pour fabriquer un film mince polymère (4) selon l'une quelconque des revendications 1 à 7 où
la résine réticulable thermiquement est au moins l'une d'une résine d'urée, d'une résine de mélamine, d'une résine phénolique, d'une résine époxyde, d'une résine de polyester insaturé, d'une résine alkyde ou d'une résine d'uréthane.

9. Procédé pour fabriquer un film mince polymère (4) selon l'une quelconque des revendications 1 à 8 où
une composition de la résine thermoplastique contient au moins un membre choisi dans le groupe consistant en un colorant, un pigment, des particules métalliques, des particules d'oxyde métallique, des particules organiques, des petites molécules organiques, un polymère organique, un dendrimère, des molécules biologiques, un nanotube de carbone, un fullerène, du noir de carbone et un minéral de type argile.
